# EUROPEAN PATENT SPECIFICATION

(11) **EP 1 202 553 B1**
(45) Date of publication and mention of the grant of the patent: **27.08.2008**
(21) Application number: 01125343.2
(22) Date of filing: 29.10.2001
(51) Int. Cl.: H04N 1/40

(54) **Image processing apparatus**
Bildverarbeitungsvorrichtung
Appareil de traitement d'image

(30) Priority: 27.10.2000 JP 2000329270
(43) Date of publication of application: 02.05.2002
(73) Proprietor: Sharp Kabushiki Kaisha, Osaka 545 (JP)
(72) Inventor: Yamada, Hideaki, Ichihara-shi, Chiba (JP)
(74) Representative: Müller - Hoffmann & Partner

(56) References cited:
- EP-A- 0 100 811
- EP-A- 0 831 637
- US-A- 5 905 579
- YOSHIDA M ET AL: "Bi-level rendition of images containing text, screened halftone and continuous tone" COUNTDOWN TO THE NEW MILENNIUM. PHOENIX, DEC. 2 - 5, 1991, PROCEEDINGS OF THE GLOBAL TELECOMMUNICATIONS CONFERENCE. (GLOBECOM), NEW YORK, IEEE, US, vol. 3, 2 December 1991 (1991-12-02), pages 104-109, XP010042741 ISBN: 0-87942-697-7

## Description

### BACKGROUND OF THE INVENTION

### 1. Field of the Invention

The present invention relates to an image processing apparatus such as a facsimile machine that converts an input image into binary image data. More specifically, the invention relates to an image processing apparatus that converts both of character portions or the like and halftone portions into more legible images and outputs resulting images by discriminating between the character portions or the like that are essentially binary images and the halftone portions such as a photograph and performing binarization processing suitable for each kind of portions.

### 2. Description of the Related Art

In facsimile machines, the transmission side reads an original image with a built-in scanner or the like, converts a read image into binary image data, and transmits the produced binary image data. The reception side prints out a binary image using the received image data itself. For such an image as a text image that can essentially be expressed by two values, the object of binarization can be attained by sorting pixel values of a multi-value image obtained by reading with a scanner or the like into two values using a proper slice level. On the other hand, a halftone image such as a photograph is binarized so as to produce a pseudo-halftone expression that is closer to the original image. Two methods are mainly used to express pseudo-halftone by two values. The first method is the dither method in which halftone is expressed in such a manner that pixels are divided into regions having a fixed size and converts an average density of each region into the number of black dots. The second method is the error diffusion method in which halftone is expressed in such a manner that each pixel is forcibly regarded as a black pixel or a white pixel and an error between the actual density of the pixel and that of the black or white pixel is distributed to neighboring pixels. In particular, the error diffusion method is gradually becoming the mainstream because of its advantages that halftone of an original image can be expressed more faithfully and that character portions having a high density and outline character portions can be expressed relatively clearly.

However, with either method, in a pseudo-halftone-expressed characters, characters are less clear than in a simply binarized image and, in particular, their edges (boundaries) are blurred.

To solve the above problem, a method is employed in which an image including halftone portions such as a photograph and binary portions such as text is converted into a binary image that is closer to the original image by dividing the original image in advance into character areas and halftone areas and binarizing the character portions using binarizing means that produces clearer edges and the halftone portions using the error diffusion method, for example.

However, where the original image is, for example, a printed document that is expressed by halftone dots, there is a problem that a moire may occur depending on the relationship between the halftone dot pitch and the pitch of a reading sensor, resulting in a phenomenon that a halftone portion that should be expressed by halftone dots is erroneously judged as a character edge. Further, characters are not necessarily expressed in black and there may exist outline characters. It is desirable that the edges of outline characters be binarized correctly.

An image processing apparatus disclosed in JEuropean Patent Application EP-A-0831636 (the inventor of which is the same as of the present invention) employs a method in which photograph halftone portions and character portions are separated from each other as different areas and the halftone portions are converted into a pseudo-halftone expression by the error diffusion method whereas the character portions are subjected to simple binarization to reproduce characters clearly. A method for determining character boundaries is such that a subject pixel is judged as being of a character portion boundary when the difference between a maximum value and a minimum value of the densities of five pixels that are the subject pixel, a pixel on a top-right of a pixel that is on a top-right of the subject pixel, a pixel on a bottom-right of a pixel that is on a bottom-right of the subject pixel, a pixel on a top-left of a pixel that is on a top-left of the subject pixel, and a pixel on a bottom-left of a pixel that is on a bottom left of the subject pixel is greater than a predetermined threshold value. The reason why the pixels located in the directions that form angles 45° with the vertical line and the horizontal line passing through the subject pixel are used as pixels for boundary judgment is to minimize the influence of a moiré that may occur in reading an image formed by halftone dots.

In an image region separation circuit disclosed in Japanese Unexamined Patent Publication JP-A 5-136994 (1993), an edge region extension circuit extends an edge pixel detected by an edge detection circuit to a plurality of regions including the edge pixel and having different sizes. An edge pixel concentration detection circuit selects a particular region from the plurality of extended regions in consideration of local concentrations, and simple binarization processing is performed on the selected region.

An edge region detection device disclosed in Japanese Unexamined Patent Publication JP-A 9-321989 (1997), which has a smoothing circuit for performing a smoothing process on a subject pixel of image data, determines an image edge based on an output of a circuit for detecting the differences between the densities of the subject pixel and pixels before and after the subject pixel and a detection result of a density detecting means.

In the image processing apparatus disclosed in EP-A-0831636, the positional relationships between a subject pixel and reference pixels are prescribed to minimize the influence of a moiré that may occur depending on the positions and pitch of halftone dots and the resolution of a reading sensor when the original image is formed by halftone dots. However, as smaller halftone dot pitches come to be employed more frequently in printing, there occur cases in which the above positional relationships between a subject pixel and reference pixels are not optimumones. Improvement is necessary in this respect. Further, characters are not necessarily expressed in black at a high density. It is desirable that characters be extracted correctly even in the case of outline characters, in the case where high-density halftone characters are written on a halftone background, and in like cases. Still further, when a character portion boundary is determined based on a density difference in a subject pixel region, an edge region tends to be judged wider than the real edge region. This results in a problem that when edges are subjected to simple binarization, characters that are wider than the real characters may be produced or white portions may appear around characters depending on the threshold value used.

### SUMMARY OF THE INVENTION

An object of the present invention is to provide an image processing apparatus capable of correctly detecting character boundaries and outputting a binary image that is expressed in such a manner as to be closer to the original image.

This object is solved in accordance with the appended claims.

Accordingly, the present invention provides an image processing apparatus comprising:
an area judging section for dividing an input image into a character portion area and a halftone portion area; and
a binarization processing section for carrying out binarization processing corresponding to each of areas and outputting a resulting image,
**characterized in that** the image processing apparatus is provided with switching means for switching between a first judging means and a second judging means included in said area judging section,
said first judging means being adapted for judging a subject pixels being of a boundary of a character portion when a difference between a maximum value (Qmax) and a minimum value (Qmin) of densities of five pixels, that are the subject pixel and four neighboring reference pixels that are respectively located in a rectangular matrix of pixels on top-right, bottom-right, top-left and bottom-left immediately adjacent to the subject pixel is greater than a predetermined threshold value (Te), and
said second judging means being adapted for judging a subject pixel as being of a boundary of a character portion when a difference between a maximum value (Qmax) and a minimum value (Qmin) of densities of five pixels, that are the subject pixel and four reference pixels in a rectangular matrix of pixels, namely a pixel immediately adjacent on top-right to a pixel that is immediately adjacent on top-right to the subject pixel, a pixel immediately adjacent on bottom-right to a pixel that is immediately adjacent on bottom-right to the subject pixel, a pixel immediately adjacent on top-left to a pixel that is immediately adjacent on top-left to the subject pixel, and a pixel immediately adjacent on bottom-left to a pixel that is immediately adjacent on bottom-left to the subject pixel is greater than a predetermined value.

In the invention, it is preferable that the binarization processing section includes character portion binarization processing means for setting, as a white dot, a subject pixel that has been judged by the area division as being of a character portion or a boundary of a character portion when a difference between a density of the subject pixel and an average density of neighboring pixels of the subject pixel is greater than a predetermined value and the density of the subject pixel deviates from the average density toward a white side, setting the subject pixel as a black dot when the difference is greater than a predetermined value and the density of the subject pixel deviates from the average density toward a black side, and setting the subject pixel as a dot having a density that is determined by pseudo-halftone processing when the difference is smaller than or equal to the predetermined value.

In the invention, it is preferable that the subject pixel and the reference pixels are set at pixel positions corresponding to approximately identical reference resolutions in the horizontal and vertical directions, and when the input image is processed at another combination of resolutions, the reference pixels are set at positions closest to the pixel positions corresponding to the reference resolutions.

In the invention, it is preferable that at least one of the threshold value and the predetermined density difference value can be changed.

In the invention, it is preferable that use of at least one of the first judging means and the character portion binarization processing means can be cancelled.

In the invention, it is preferable that use of at least one of the first judging means or the second judging means and the character portion binarization processing means can be cancelled.

### BRIEF DESCRIPTION OF THE DRAWINGS

Other and further objects, features, and advantages of the invention will be more explicit from the following detailed description taken with reference to the drawings wherein:
Fig. 1 is a block diagram showing a facsimile machine 10 using an image processing apparatus 20 according to an embodiment of the present invention;
Fig. 2 is a flow chart showing an operation of an image processing apparatus 20;
Figs. 3A and 3B are charts showing positional relationships between a subject pixel and reference pixels for determination of a character portion boundary (character edge).
Figs. 4A and 4B are diagrams showing conventional binarization processing on character edges; and
Figs. 5A and 5B are diagrams showing binarization processing that is performed by character portion binarization processing means according to the invention.

### DETAILED DESCRIPTION OF THE PREFERRED EMBODIMENTS

Now referring to the drawings, preferred embodiments of the invention are described below.

The present invention is effective for all communication apparatuses and information processing apparatuses using an image processing apparatus that converts an input image into a binary image and outputs the binary image. The invention will be described below in a case where it is applied to a facsimile machine.

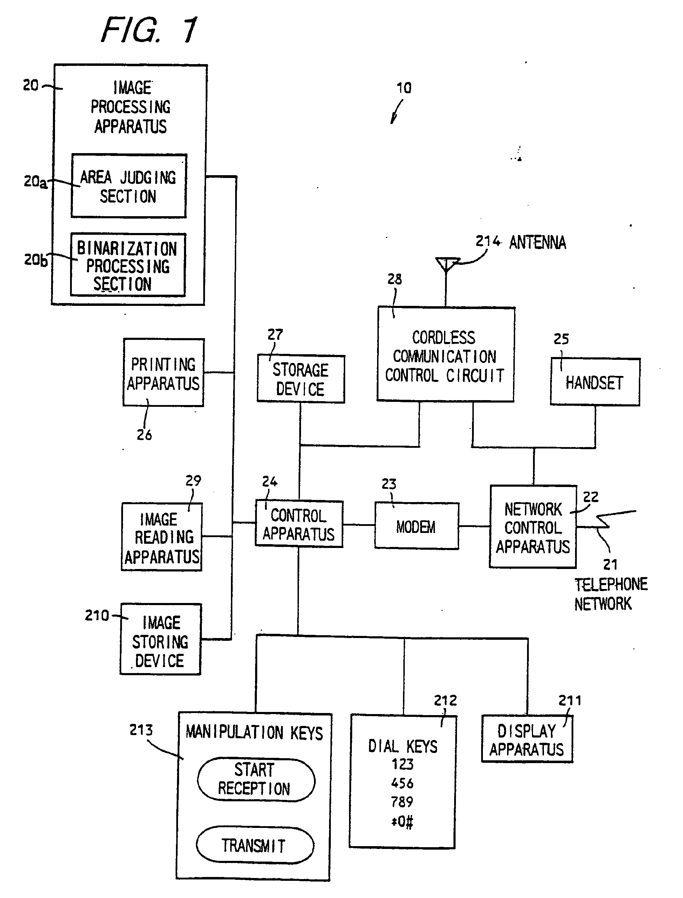

Fig. 1 is a block diagram showing a facsimile machine 10 using an image processing apparatus 20 according to an embodiment of the invention. The facsimile machine 10 is connected to a telephone network 21 via a network control apparatus 22. The network control apparatus 22 monitors the state of the telephone network 21 and switches the circuit to a modem 23 side, a handset 25 side, and a cordless communication control circuit 28 side. The modem 23 modulates an image digital signal into an analog signal that is suitable for the telephone network 21 and demodulates an analog signal coming from the telephone network 21 into a digital signal for printing.

A printing apparatus 26 is a unit for printing a received image or a read image, and is usually of a thermal type, an electrophotography type, or an ink jet type. An image reading apparatus 29 is a apparatus for reading a document for transmission or copying, and is usually a reduction reading type apparatus using a combination of a lens and a CCD line sensor or a contact sensor type apparatus using a rod lens array. An image storing device 210 is a unit for storing a read image or a received image. The incorporation of this unit enables a number of complex functions such as transfer of a received image, broadcast, substitutive reception at the time of using up of printing sheets, and memorized transmission. The image storing device 210 is also used for storage of an image that has been processed according to the invention. Operating according to programs stored in a storage device 27, a control apparatus 24 determines operation of the entire machine, commands the entire machine, and instructs a display apparatus 211 how to perform display based on information that is inputted from manipulation keys 213 and dial keys 212, information coming form the individual units of the facsimile machine and indicating their states, a signal coming from the telephone network 21, and other information. The control apparatus 24 further performs image compression for shortening an image transmission time and expands a compressed image signal into original pixel sequence information. Having an area judging section 20a and a binarization processing section 20b, the image processing apparatus 20 divides an input image that has been read by the image reading apparatus 29 into areas, performs binarization processing suitable for each area, and causes the printing apparatus 26 to output a resulting image.

The manipulation keys 213 and the dial keys 212 are used when a user inputs information or an instruction to the facsimile machine. A display apparatus 211 is a unit through which the facsimile machine presents information to and thereby guides a user. Various parameters can be set in the facsimile machine by using the display apparatus 211, the manipulation keys 213, and the dial keys 212. Using the display apparatus 211, the manipulation keys 213, and the dial keys 212, a user changes a threshold value to be used in determining character boundaries and a density difference to be used in performing binarization processing.

The handset 25 is equipped with a receiver and a transmitter for a telephone call. The facsimile machine 10 can be connected to one or a plurality of cordless slave telephone units. The cordless communication control circuit 28 is a apparatus for controlling the cordless slave telephone unit (s) (not shown) and incorporates a tuner for searching for a communication channel for connection to the slave telephone unit, establishing a connection, enabling a call, and transmitting and receiving radio waves. An antenna 214 transmits and receives radio waves for communication with the slave unit.

When halftone has been selected by the manipulation keys, a document image that is read by the image reading apparatus 29 is converted into a pseudo-halftone image by the binarization processing section 20b according to a program stored in the storing device 27 and the resulting pseudo-halftone image is transmitted to the telephone network 21. This operation is performed in such a manner that a read image is stored in the image storing device 210 as it is, converted into a pseudo-halftone image, and then transmitted to the telephone network 21 at a time or that data of lines necessary for conversion are stored and delayed, converted into pseudo-halftone data, and then transmitted almost in real time.

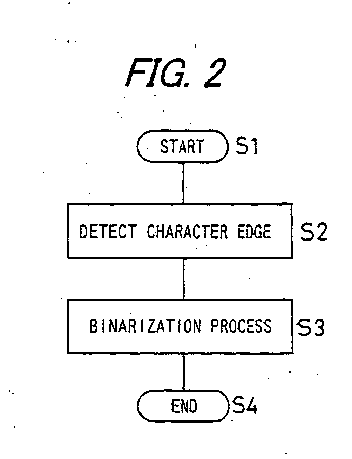

Fig. 2 is a flow chart showing an operation of an image processing apparatus 20. At step s1, the image processing apparatus 20 is activated. At step s2, a character portion boundary of the image that has been read by the image reading apparatus 29, i.e. a character edge is determined. After the character edge is determined at step 2, the operation advances to step s3. At step s3, binarization processing is performed. At step s4, the operation comes to an end.

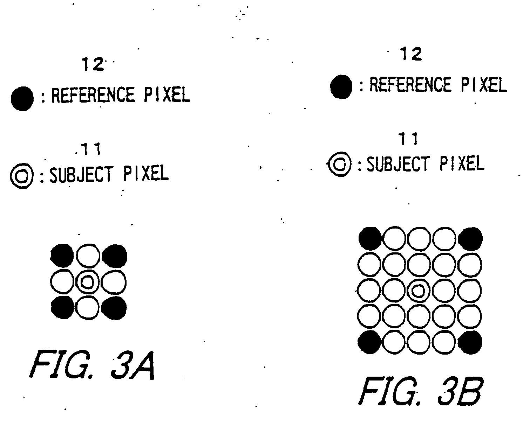

Figs. 3A and 3B are charts showing positional relationships between a subject pixel and reference pixels for determination of a character portion boundary (character edge). At step s2 in Fig. 2, the character portion boundary determination is performed by the area judging section 20a, more specifically, performed by first judging means or second judging means of the area judging section 20a in accordance with the type of an input image.

Fig. 3A shows a subject pixel and reference pixels to be used in determining character edges with the first judging means. Referring to Fig. 3A, a current subject pixel 11 (indicated by mark " ⓞ") is judged as being of a character edge when the difference between a maximum value Qmax and a minimum value Qmin of the densities of five pixels that are the subject pixel and four reference pixels 12 (indicated by mark "●") that are located on the top-right, bottom-right, top-left, and bottom-left of the subject pixel 11 is greater than a predetermined threshold value Te.

Fig. 3B shows a subject pixel 11 and reference pixels 12 to be used in determining character edges with the second judging means. Character edges are determined according to the same criterion as in the above case by using five pixels that are a subject pixel 11 and four reference pixels 12, that is, a pixel on the top-right of a pixel that is on the top-right of the subject pixel 11, a pixel on the bottom-right of a pixel that is on the bottom-right of the subject pixel 11, a pixel on the top-left of a pixel that is on the top-left of the subject pixel 11, and a pixel on the bottom-left of a pixel that is on the bottom left of the subject pixel 11. Either judging means uses, as the reference pixels 12, four pixels located in the directions that forms angles 45° with the vertical line and the horizontal line passing through the subject pixel 11. This is because halftone dots are usually arranged in the direction that forms angles 45° with the sides of a document. For each of input images having different halftone dot pitches, a user chooses a proper one of the first judging means and the second judging means with the different distances between the subject pixel 11 and the reference pixels 12, whereby the frequency of occurrence of erroneous determination of a character edge in connection with halftone dots can be reduced and hence character edges can be detected more correctly. More specifically, the user chooses, according to an instruction appearing on the display apparatus 211, optimum judging means using switching means that consists of the manipulation keys 213, the dial keys 212, and the control apparatus 24 that receives inputs from the manipulation keys 213 and the dial keys 212.

After detection of character edges, the process goes to a step of binarizing the character edges. At step s3 in Fig. 2, as for the binarization processing on character portions, two kinds of process are available. In the first process, character edges and a portion enclosed by the character edges are judged as being a character portion and simple two-value judgment is performed on the entire character portion to produce a black character or an outline character. In the second process, simple binarization is performed on only the character edges. The following description will be directed to the latter process. In this case, where characters are halftone images, converting a portion of each character other than edges into pseudo-halftone and performing simple binarization on only the edges improve the legibility of the characters. Further, when expressed by halftone, inside portions of respective characters become closer to those in the original image.

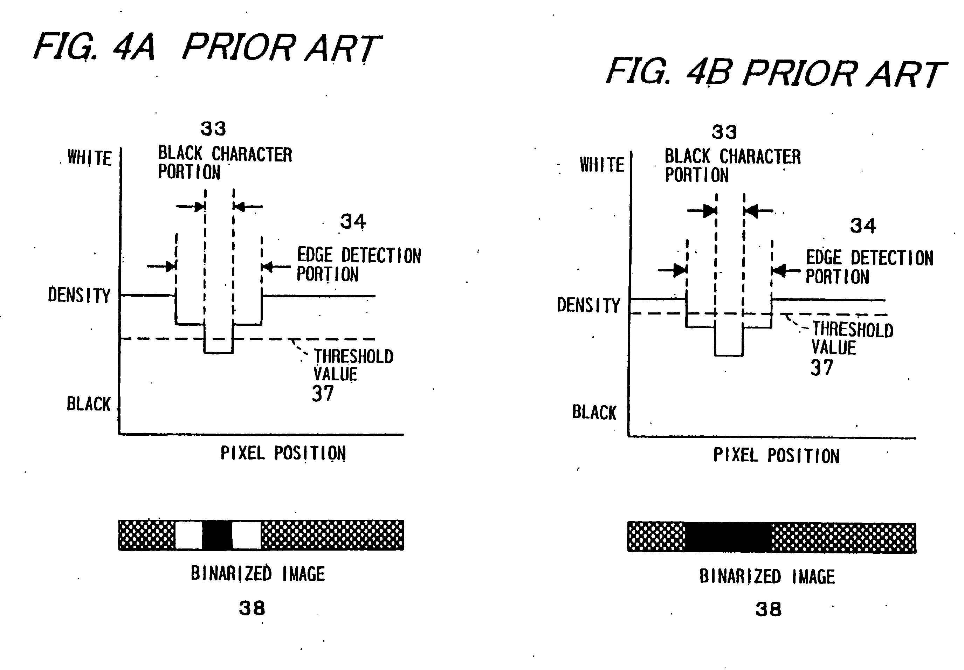

Figs. 4A and 4B are diagrams showing conventional binarization processing on character edges. For example, where each pixel is expressed by 8 bits (256-gradation halftone), black is given a density value "0" and white is given a density value "255." Fig. 4A shows a method in which portions that have been judged as character edges are binarized by a simple binarizing method. An edge detection portion 34 including portions that have been judged as character edges is wider than a black character portion 33. When the level of a threshold value 37 is set low and closer to the black side, parts of the edge detection portion 34 become white dots and white portions occur on both sides of an inside portion that is expressed as a black dot in a binarized image 38; a binarization result is such that a character is enclosed by a white portion. When the level of the threshold value 37 is raised so as to be closer to the white side as shown in Fig. 4B to eliminate white portions, the edge detection portion 34 is expressed as a single black dot and the character portion of the outputted binarized image 38 becomes wider than the actual character portion 33; after the conversion the character becomes wider.

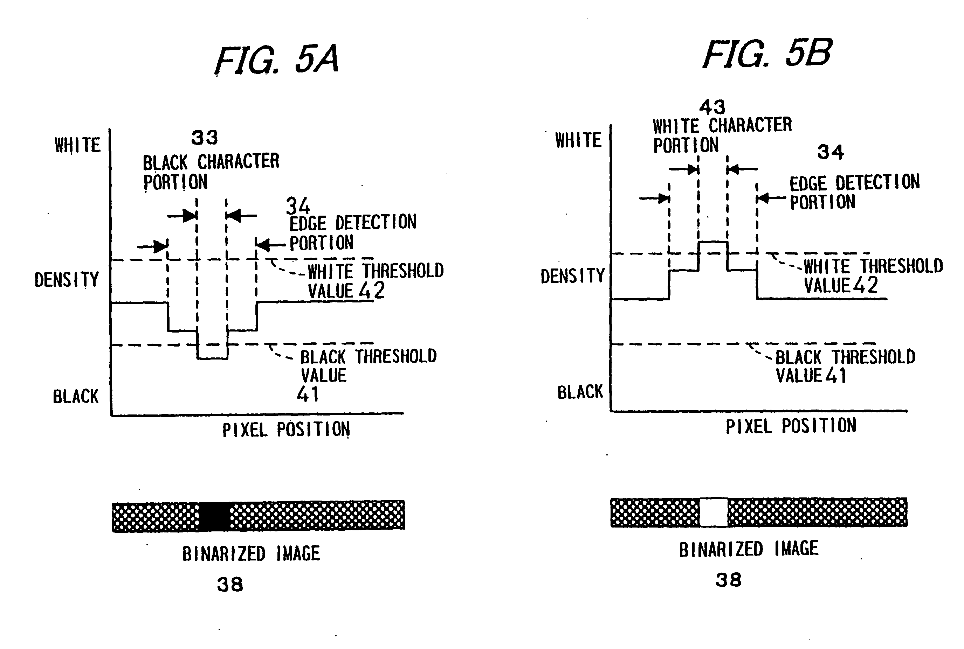

Figs. 5A and 5B are diagrams showing binarization processing that is performed by character binarizing means according to the invention. The binarization of character portions is performed by the character binarizing means of the binarization processing section 20b. An average density of neighboring pixels of a subject pixel 11 is represented by H. The neighboring pixels are defined as pixels located in a range that covers, for example, 3-10 pixels in the main scanning direction and 5-20 pixels in the auxiliary scanning direction with the subject pixel 11 located at the center of the range. It is known that a satisfactory result can be obtained when the densities of the pixel in such a range is averaged. For the average density H, a white threshold value 42 and a black threshold value 41 are set at H + d1 and H - d2, respectively, where d1 and d2 are predetermined density differences. A pixel that has judged as being of a character edge is set as a white dot when its density is deviated from the average density H toward the white side, and is set as a black dot when its density is deviated from the average density H toward the black side. Specifically, a pixel that has been judged as being of a character edge is binarized into a white dot when its density Q satisfies Q > H + d1, into a black dot when its density Q satisfies Q < H - d2, and into a dot having a color that is determined by pseudo-halftone processing when its density Q satisfies H + d2 ≧ Q ≧ H - d1. Even when the values d1 and d2 are identical, the binarization is well suitable for practical use. Figs. 5A and 5B show examples of binarization of a black character and a white character, respectively. A black character portion 33 and a white character portion 43 are binarized into a single black dot and a single white dot, respectively. The density differences d1 and d2 need to be re-set depending on the halftone density of a character, and a user can change the density differences d1 and d2 to optimum values. Specifically, the user inputs optimum density differences using the manipulation keys 213 and dial keys 212 according to an instruction appearing on the display apparatus 211. The use of the character binarizing means increases the probability that a halftone dot that has been erroneously judged as being of a character edge is binarized into pseudo-halftone and makes it possible to correctly express the edges of outline characters.

As for the positional relationships between the subject pixel 11 and the reference pixels 12, they are usually set at pixel positions corresponding to (approximately) identical reference resolutions in the main scanning direction and the auxiliary scanning direction that are equal to, for example, 8 dots/mm and 7.7 dots/mm (pseudo-halftone) or 200 dpi and 200 dpi (color image), respectively. However, where an image is to be expressed in pseudo-halftone at another combination of resolutions such as 16 dots/mm and 7.7 dots/mm, pixels closest to the reference pixel positions corresponding to the reference resolutions are newly employed as the reference pixels 12.

A user can cancel the use of the above-described character edge judging means and character portion binarization processing means. This is done in the same manner as described above, that is, by manipulating the manipulation keys 213 and the dial keys 212 according to an instruction appearing on the display apparatus 211. This function is effective when it is desirable not to use the means according to the invention, as in a case where a user wants to express the entire image in pseudo-halftone including characters written on a billboard in a photograph.

## Claims

1. An image processing apparatus (20) comprising:
an area judging section (20a) for dividing an input image into a character portion area and a halftone portion area; and
a binarization processing section (20b) for carrying out binarization processing corresponding to each of areas and outputting a resulting image,
**characterized in that** the image processing apparatus is provided with switching means (24, 212, 213) for switching between a first judging means and a second judging means included in said area judging section,
said first judging means being adapted for judging a subject pixel (11) as being of a boundary of a character portion when a difference between a maximum value and a minimum value of densities of five pixels, that are the subject pixel (11) and four neighboring reference pixels (12) that are respectively located in a rectangular matrix of pixels on top-right, bottom-right, top-left and bottom-left immediately adjacent to the subject pixel (11) is greater than a predetermined threshold value , and
said second judging means being adapted for judging a subject pixel (11) as being of a boundary of a character portion when a difference between a maximum value and a minimum value of densities of five pixels, that are the subject pixel (11) and four reference pixels (12) in a rectangular matrix of pixels, namely a pixel immediately adjacent on top-right to a pixel that is immediately adjacent on top-right to the subject pixel (11), a pixel immediately adjacent on bottom-right to a pixel that is immediately adjacent on bottom-right to the subject pixel (11), a pixel immediately adjacent on top-left to a pixel that is immediately adjacent on top-left to the subject pixel (11), and a pixel immediately adjacent on bottom-left to a pixel that is immediately adjacent on bottom-left to the subject pixel (11) is greater than a predetermined value.

2. The image processing apparatus of claim 1, wherein the binarization processing section (20b) includes character portion binarization processing means for setting, as a white dot, a subject pixel (11) that has been judged by the area division as being of a character portion or a boundary of a character portion when a difference between a density of the subject pixel (11) and an average density of the neighboring pixels of the subject pixel (11) is greater than a first predetermined value and the density of the subject pixel (11) deviates from the average density toward a white side, setting the subject pixel (11) as a black dot when the difference is greater than a second predetermined value and the density of the subject pixel (11) deviates from the average density toward a black side, and setting the subject pixel (11) as a dot having a density that is determined by pseudo-halftone processing when the difference is not greater than said first predetermined value in case the density of the subject pixel (11) deviates toward the white side and the difference is not greeter than said second predetermined value in case the density of the subject pixel (11) deviates toward the black side.

3. The image processing apparatus of claim 2, wherein at least one of the threshold value and the first and second predetermined values can be changed.

4. The image processing apparatus of claim 2, wherein use of at least one of the first judging means and the character portion binarization processing means, or use of at least one of the first judging means or the second judging means and the character portion binarization processing means can be cancelled.

5. The image processing apparatus of claim 1, wherein the subject pixel (11) and the four reference pixels (12) are set at pixel positions corresponding to approximately identical reference resolutions in the horizontal and vertical directions, and when the input image is processed at another combination of resolutions, the reference pixels (12) are set at positions closest to the pixel positions corresponding to the reference resolutions.

## Patentansprüche

1. Bildverarbeitungsvorrichtung (20), die aufweist:
einen Bereichsentscheidungsabschnitt (20a) zum Unterteilen eines eingegebenen Bildes in eine Zeichenbereichsfläche und eine Halbtonbereichsfläche; und
einen Binärwandlungsverarbeitungsabschnitt (20b), der entsprechend jedem Bereich eine Binärwandlungsverarbeitung ausführt und ein sich ergebendes Bild ausgibt,
**dadurch gekennzeichnet, dass** die Bildverarbeitungsvorrichtung (20) mit Schaltmitteln (24, 212, 213) versehen ist, die zwischen ersten Entscheidungsmitteln und in dem Bereichsentscheidungsabschnitt enthaltenen zweiten Entscheidungsmitteln umschalten,
die ersten Entscheidungsmittel dazu eingerichtet sind, ein in Betracht kommendes Pixel (11) als Grenze eines Zeichenbereichs zu entscheiden, wenn eine Differenz zwischen einem Maximalwert und einem Minimalwert der Dichten von fünf Pixeln größer als ein vorbestimmter Schwellenwert ist, wobei diese fünf Pixel das in Betracht kommende Pixel (11) und vier benachbarte Referenzpixel (12) sind, die in einer rechtwinkligen Pixelmatrix jeweils rechts oben, rechts unten, links oben und links unten unmittelbar angrenzend an das in Betracht kommende Pixel (11) liegen, und
die zweiten Entscheidungsmittel dazu eingerichtet sind, ein in Betracht kommendes Pixel (11) als Grenze eines Zeichenbereichs zu entscheiden, wenn eine Differenz zwischen einem Maximalwert und einem Minimalwert der Dichten von fünf Pixeln größer als ein vorbestimmter Wert ist, wobei diese fünf Pixel das in Betracht kommende Pixel (11) und vier Referenzpixel (12) in einer rechtwinkligen Pixelmatrix sind, nämlich ein Pixel, das unmittelbar rechts oben an ein Pixel angrenzt, welches rechts oben unmittelbar an das in Betracht kommende Pixel (11) angrenzt, ein Pixel, das unmittelbar rechts unten an ein Pixel angrenzt, welches rechts unten unmittelbar an das in Betracht kommende Pixel (11) angrenzt, ein Pixel, das unmittelbar links oben an ein Pixel angrenzt, welches links oben unmittelbar an das in Betracht kommende Pixel (11) angrenzt, und ein Pixel, das unmittelbar links unten an ein Pixel angrenzt, welches links unten unmittelbar an das in Betracht kommende Pixel (11) angrenzt.

2. Bildverarbeitungsvorrichtung nach Anspruch 1, bei der der Binärwandlungsverarbeitungsabschnitt (20b) Zeichenbereich-Binärwandlungsverarbeitungsmittel enthalten, die ein in Betracht kommendes Pixel (11), das bei der Bereichsunterteilung als Zeichenbereich oder als Grenze eines Zeichenbereichs entschieden wurde als einen weißen Punkt setzen, wenn eine Differenz zwischen einer Dichte des in Betracht kommenden Pixels (11) und einer mittleren Dichte der dem in Betracht kommenden Pixel (11) benachbarten Pixel größer als ein erster vorbestimmter Wert ist und wenn die Dichte des in Betracht kommenden Pixels (11) von der mittleren Dichte zu einer weißen Seite hin abweicht, die das in Betracht kommende Pixel (11) als einen schwarzen Punkt setzen, wenn die Differenz größer als ein zweiter vorbestimmter Wert ist und wenn die Dichte des in Betracht kommenden Pixels (119 von der mittleren Dichte zu einer schwarzen Seite hin abweicht, und die das in Betracht kommende Pixel als einen Punkt setzen, der eine durch eine Pseudo-Halbtonverarbeitung ermittelte Dichte hat, wenn die Differenz nicht größer ist als der erste vorbestimmte Wert, für den Fall, dass die Dichte des in Betracht kommenden Pixels (11) zur weißen Seite hin abweicht, und wenn die Differenz nicht größer ist als der zweite vorbestimmte Wert, für den Fall, dass die Dichte des in Betracht kommenden Pixels zur schwarzen Seite hin abweicht.

3. Bildverarbeitungsvorrichtung nach Anspruch 2, bei der wenigstens einer der Werte des Schwellenwerts und des ersten und zweiten vorbestimmten Werts änderbar ist.

4. Bildverarbeitungsvorrichtung nach Anspruch 2, bei der die Verwendung wenigstens eines der Mittel, erste Entscheidungsmitttel und Zeichenbereich-Binärwandlungsverarbeitungsmittel oder die Verwendung wenigstens eines der Mittel, zweite Entscheidungsmittel und Zeichenbereich-Binärwandlungsverarbeitungsmittel unterbunden werden kann.

5. Bildverarbeitungsvorrichtung nach Anspruch 1, bei der das in Betracht kommende Pixel (11) und die vier Referenzpixel (12) auf Pixelpositionen gesetzt sind, die annähernd identische Referenzauflösungen in der horizontalen und der vertikalen Richtung haben, und wenn das eingegebene Bild bei einer anderen Kombination von Auflösungen verarbeitet wird, die Referenzpixel (12) auf Positionen gesetzt sind, die den den Referenzauflösungen entsprechenden Pixelpositionen am nächsten liegen.

## Revendications

1. Appareil de traitement d'image (20) comprenant :
une section de jugement de zone (20a) pour diviser une image d'entrée en une zone de partie caractère et une zone de partie demi-teinte ; et
une section de traitement de binarisation (20b) pour effectuer un traitement de binarisation correspondant à chacune des zones et délivrer en sortie une image résultante.
**caractérisé en ce que** l'appareil de traitement d'image est équipé d'un moyen de commutation (24, 212, 213) pour commuter entre un premier moyen de jugement et un second moyen de jugement compris dans ladite section de jugement de zone,
ledit premier moyen de jugement étant adapté pour juger un pixel sujet (11) comme faisant partie d'une limite d'une partie caractère lorsque la différence entre une valeur maximale et une valeur minimale de densités de cinq pixels, à savoir, le pixel sujet (11) et quatre pixels de référence voisins (12) qui sont situés dans une matrice de pixels rectangulaire de façon immédiatement adjacente au pixel sujet (11) en haut à droite, en bas à droite, en haut à gauche et en bas à gauche, respectivement, est supérieure à une valeur de seuil prédéterminée, et
ledit second moyen de jugement étant adapté pour juger un pixel sujet (11) comme faisant partie d'une limite d'une partie caractère lorsque la différence entre une valeur maximale et une valeur minimale de densités de cinq pixels, à savoir, le pixel sujet (11) et quatre pixels de référence (12) dans une matrice de pixels rectangulaire, à savoir, un pixel immédiatement adjacent en haut à droite à un pixel qui est immédiatement adjacent en haut à droite au pixel sujet (11), un pixel immédiatement adjacent en bas à droite à un pixel qui est immédiatement adjacent en bas à droite au pixel sujet (11), un pixel immédiatement adjacent en haut à gauche à un pixel qui est immédiatement adjacent en haut à gauche au pixel sujet (11), et un pixel immédiatement adjacent en bas à gauche à un pixel qui est immédiatement adjacent en bas à gauche au pixel sujet (11), est supérieure à une valeur prédéterminée.

2. Appareil de traitement d'image selon la revendication 1, dans lequel la section de traitement de binarisation (20b) comprend un moyen de traitement de binarisation de partie caractère pour :
établir en tant que point blanc, un pixel sujet (11) qui a été jugé par la division de zone comme faisant partie d'une partie caractère ou d'une limite d'une partie caractère lorsque la différence entre la densité du pixel sujet (11) et la densité moyenne des pixels voisins du pixel sujet (11) est supérieure à une première valeur prédéterminée et que la densité du pixel sujet (11) dévie de la densité moyenne vers un côté blanc,
établir le pixel sujet (11) en tant que point noir lorsque la différence est supérieure à une seconde valeur prédéterminée et que la densité du pixel sujet (11) dévie de la densité moyenne vers un côté noir, et
établir le pixel sujet (11) en tant que point ayant une densité qui est déterminée par le traitement de pseudo demi-teinte lorsque la différence n'est pas supérieure à ladite première valeur prédéterminée dans le cas où la densité du pixel sujet (11) dévie vers le côté blanc, et que la différence n'est pas supérieure à ladite seconde valeur prédéterminée dans le cas où la densité du pixel sujet (11) dévie vers le côté noir.

3. Appareil de traitement d'image selon la revendication 2, dans lequel la valeur de seuil et/ou les première et seconde valeurs prédéterminées peuvent être changées.

4. Appareil de traitement d'image selon la revendication 2, dans lequel l'utilisation du premier moyen de jugement et/ou du moyen de traitement de binarisation de partie caractère, ou l'utilisation du premier moyen de jugement ou du second moyen de jugement et/ou du moyen de traitement de binarisation de partie caractère, peuvent être annulées.

5. Appareil de traitement d'image selon la revendication 1, dans lequel le pixel sujet (11) et les quatre pixels de référence (12) sont établis au niveau d'emplacements de pixels correspondants à des résolutions de référence approximativement identiques dans les directions horizontale et verticale, et lorsque l'image d'entrée est traitée au niveau d'une autre combinaison de résolutions, les pixels de référence (12) sont établis au niveau d'emplacements les plus proches des emplacements de pixels correspondants aux résolutions de référence.
